# EUROPEAN PATENT APPLICATION

(11) **EP 2 157 154 A2**
(43) Date of publication of application: **24.02.2010**
(21) Application number: 08737790.9
(22) Date of filing: 10.04.2008
(51) Int. Cl.: C10B 49/10, C10B 53/07, B01J 8/24, B09B 3/00, C22B 21/00

(54) **METHOD FOR TREATING TETRA-BRICK CONTAINERS, IN PARTICULAR FOR TREATING THE METAL AND PLASTIC WASTE OF SAID CONTAINERS, AND PYROLYSIS REACTOR FOR CARRYING OUT SAID METHOD**

(30) Priority: 12.04.2007 ES 200700973
(71) Applicant: Energy & Environment Consulting, S. L., 03001 Alicante (ES); Universidad Del Pais Vasco-Euskal Herriko Unibertsitatea, 48940 Leioa (Bizkaia) (ES)
(72) Inventor: AGUADO ZARRAGA, ROBERTO, E-48940 Leioa (ES); OLAZAR AURRECOECHEA, MARTIN, E-48940 Leioa (ES); BILBAO ELORRIAGA, JAVIER, E-48940 Leioa (ES); MARTINEZ CAMUS, JOSE LEANDRO, 03450 Playa San Juan Alicante (ES)
(74) Representative: Ponti Sales, Adelaida
(86) International application number: PCT/IB2008/051363
(87) International publication number: WO 2008/126026

(57) **Abstract**

The process includes the stage of carrying out the pyrolysis of said waste and the stage of recovering said metal from pyrolysis, and is **characterised in that** said pyrolysis is carried out in the presence of a cracking catalyst and under conditions suitable for permitting total conversion of the plastic that said waste includes to gas, in reactor conditions (1), and in that it also includes the stage of recovering said gas to make use of it to produce energy and/or materials. The reactor is **characterised in that** it includes contact system named spouted bed that permits said metal to be separated from the bed without need to remove the catalyst.

## Description

The present invention relates to a process for treating containers of the tetrapak type, especially the metal and plastic waste said containers include, and to a pyrolysis reactor for carrying out said process.

### BACKGROUND OF THE INVENTION

Tetrapak-type containers, such as those denominated commercially with the TetraBRIK trademark, are formed of a material composed of a sheet of aluminium coated on both sides with a film of plastic, usually low-density polyethylene, which is in turn coated with an exterior layer of paper.

The recycling of tetrapak-type containers currently involves recovering the outer layer of paper, a process which is relatively simple. However, recovery of the plastic and metal layers is very difficult to carry out and is not very viable economically, so that the sheets of aluminium and plastic constitute a waste that ends of being managed by depositing it in landfill sites.

Spanish patent ES 2130040 describes a recycling process for used tetrapak-type containers that aims at recovering the aluminium and using the plastic included in said waste materials to produce energy. The process described in the aforesaid patent proposes carrying out low-temperature pyrolysis of the aluminium and plastic waste from said containers.

In the aforesaid patent, the product to be treated is made to pass through a chamber whose walls are at a temperature ranging between 300°C and 500°C. Said walls are inclined in order to collect the heavy fraction (waxes) from the pyrolysis of the plastic in a receptacle, while the light fraction (combustible gases) is conveyed using an inert gas to a collector.

The path travelled by the waste stream in the reactor has been made sufficiently long to leave the aluminium free from polyethylene by the end of the path. Said reactor contains a series of plates inside which the heating gas circulates. The upper surface of the plates is concave, with an orifice at the vertex through which the shaft passes and along which runs the heavy fraction from the pyrolysis, which is then collected separately from the aluminium. The sheets of aluminium that remain on the plates are pushed by a rake from an upper plate to another lower plate.

The process described in the aforesaid Spanish patent presents the disadvantage of being very complex and not very efficient from the point of view of energy consumption and materials. The reactor is complex and the process produces waxes that must subsequently be treated in order to make use of them for producing energy or materials. Furthermore, the special features of the process mean that these waxes are easily contaminated by the aluminium deposited on the plates.

### DESCRIPTION OF THE INVENTION

The objective of the present invention is to resolve the disadvantages mentioned, by developing a process and reactor for treating tetrapak-type containers that is very simple and highly efficient from the energy and material viewpoints.

In accordance with a first aspect, the present invention provides a process for the treatment of tetrapak-type containers, especially of the metal and plastic waste that said containers include, which comprises the stage of carrying out the pyrolysis of said waste and the stage of recovering said metal from pyrolysis of the waste. The process is **characterised in that** said pyrolysis is carried out in the presence of a cracking catalyst and under suitable conditions for permitting total conversion of the plastic that said waste includes to gas, under reactor conditions, and in that it also includes the stage of recovering said gas for energy-production and/or material use.

Surprisingly, the process of the present invention has the advantage that it permits simple and very efficient recovery of all the metal from the containers, since all the plastic of the waste is converted into gas that can then be used, whether for energy or material purposes, for which reason no waxes are generated that must subsequently be treated. The metal can thus be separated for recovery thereof in the pyrolysis reactor itself, without need for carrying out subsequent treatments, while on the other hand the gas obtained can be recovered easily for making use of it.

Preferably, said metal is aluminium and, again preferably, the pyrolysis of the process of the present invention is carried out by means of the contact system known as spouted bed.

Spouted-bed contact system shall be taken to mean the system that basically consists in placing the solid to be treated (plastic and metal, in this case) on a bed through the base of which the conveying gas enters, and in utilising, instead of the classic distributor plate characteristic of fluidised beds, an orifice through which said gas passes, by opening a channel along which it ascends. Thus, the solid to be treated, which can be fed through the upper part, circulates by covering a cycle composed of a descending phase in the annular zone of the bed that surrounds the aforesaid channel, and an ascending phase in the zone of the channel, driven by the gas.

The spouted-bed contact system applied to the pyrolysis process of the process described offers many advantages. The most surprising among them lies in the fact that it permits the metal to be separated easily from the bed, without need to remove the catalyst. Indeed, the spouted-bed system enables the particles to be segregated in function of their density or size, since the particles of lower density, such as the aluminium, describe wider trajectories in the fountain, which means that they can be collected by fitting, for example, an inclined channel on the wall of the pyrolysis reactor.

Another advantage of the spouted-bed system lies in the fact that it enables continuous operation of the reactor, such that it is not necessary to halt its operation in order to load the solid to be treated and discharge the catalyst.

And the spouted-bed system also presents other advantages. Among them is the fact that it permits effective treatment of solids of irregular texture and with a tendency to agglomerate, characteristics common to granular materials (for example, plastic-type waste materials), since the high-velocity action in said system breaks up the agglomerates. It is likewise possible to process particles of larger size than those processed in fluidised-bed systems.

According to a preferred embodiment of the present invention, said cracking catalyst is selected for obtaining hydrocarbons, and said energy utilisation of the recovered gas includes the stage of generating electrical energy by means of cogeneration equipment substantially fed from the hydrocarbons from said gas.

Thanks to these characteristics, the process of the present invention has the advantage that it has very high energy efficiency and is very economically viable, since all the plastic from the waste is converted into a fuel (liquid or gaseous) ready for using in the cogeneration equipment that produces electrical energy and thermal energy.

In the present invention cogeneration equipment, preferably thermoelectrical cogeneration equipment, shall be taken to mean any equipment or system capable of simultaneously generating and utilising electricity and heat from a liquid or gaseous fuel, whether by means of equipment using alternating motors, gas turbines, steam turbines and/or fuel cells. In situ utilisation of the thermal energy permits very high overall energy efficiency levels to be achieved.

Advantageously, said catalyst is selected for producing hydrocarbons of suitable molecular size for using said fuel in said cogeneration equipment and, preferably, the molecular size of said hydrocarbons is such that the molecules have fewer than 25 atoms of carbon. Again advantageously, said catalyst includes zeolites with good properties for cracking.

Preferably, the process includes the stage of recovering the carbon dioxide from the combustion gases of said cogeneration equipment and, advantageously, said recovery is carried out by means of a chemical absorption and extraction system.

Thanks to these characteristics, the economic viability and the energy and material efficiency of the process of the present invention is higher still, since liquid carbon dioxide is also obtained, which finds use as a raw material in various industrial processes.

Advantageously, said method includes the stage of recirculating part of the gas generated in pyrolysis for fluidisation of the bed and for providing heat, the temperature of said recirculated gas being maintained by thermal energy from combustion of the exhaust gases from said cogeneration equipment. Thanks to this, the pyrolysis operation can be maintained autothermally without need for external provision of heat, such that the process can be self-sufficient.

Again advantageously, the process includes the stage of cooling the gas generated under reactor conditions to obtain the hydrocarbons that feed said cogeneration equipment, and said cooling is carried out by means of absorption refrigeration equipment that employs thermal energy, preferably hot water, from the cogeneration equipment itself.

Again advantageously, the metal and plastic of the containers is ground, washed and dried before it is pyrolised, with the thermal energy necessary for carrying out said drying coming from said cogeneration equipment.

Preferably, the process includes the stage of using thermal energy from said cogeneration equipment to satisfy the thermal needs of least one parallel process of treatment of waste or other products.

Advantageously, said parallel process includes the stage of desalinizing salty water using a system of desalinisation by thermal evaporation and/or the stage of treating the cellulosic products from said containers. The process thus presents the advantage that, in addition to electrical energy, it can generate drinking water of excellent quality, and the advantage that the cellulosic waste from the cardboard coating layer that tetrapak-type containers have can be treated using the energy generated with the cogeneration equipment.

In accordance with a second aspect, the present invention provides a pyrolysis reactor for carrying out the process claimed. Said reactor includes means for collecting the metal from pyrolysis of the waste, and is **characterised in that** it also includes the contact system named spouted bed, which allows the metal to be separated from the bed without need to remove the catalyst.

Thanks to these characteristics, and surprisingly, a reactor is obtained that allows the metal, preferably aluminium, to be separated from said containers easily and efficiently.

The spouted-bed system enabled the particles to be separated in function of their density or size, since the lower-density particles, such as aluminium, describe wider trajectories in the fountain.

According to a preferred embodiment, said reactor includes a wall with an inverted-cone configuration, the lower part of said wall including the inlet of gas for moving the bed. Said configuration improves the efficiency of the pyrolysis operation, since it allows the gas-flow operation interval to be increased, work to be done over a wider range of particle-size distributions, and a larger flow to be treated for a given volume. Also, thanks to said configuration, a lower temperature is required for carrying out the catalytic pyrolysis, and the energy needs of the process are accordingly greatly reduced.

Advantageously, said reactor of inverted-cone configuration includes a cylindrical upper prolongation of the same section as the conical zone and having the function of gathering up the solids dragged by the gas that emerges from the center of the bed (plastic, metal and catalyst).

Again advantageously, the zone of the pyrolysis reactor occupied by the cracking catalyst and forming the bed includes a central device that consists of two rings, one of which is located on the upper zone of the conical chamber and the other on the upper cylindrical prolongation. Said device permits the treatment of materials with narrow granular distributions (little variation of particle diameters) and very heterogeneous mixtures, that is, it permits the pyrolysation in a single operation of granulometric fractions of different sizes.

Preferably, the wall of said reactor includes said means for collecting the separated metal. Accordingly, the particles of metal that describe the widest trajectories are collected easily in the means provided on the wall.

Again preferably, said means for collecting the metal include means for permitting the continuous outlet of the separated metal. Recovery of the metal is thus very efficient and viable.

Advantageously, said reactor includes means for hot-filtering the gases generated in reactor conditions. Carrying away of the metal is avoided thereby, and therefore also contamination of the pyrolysis gases with the metal.

### BRIEF DESCRIPTION OF THE DRAWINGS

For a better understanding of all that has been outlined, a drawing is attached that shows schematically and solely by way of non-restrictive example a practical case of embodiment of the pyrolysis reactor with which said method can be carried out.

### DESCRIPTION OF A PREFERRED EMBODIMENT

The containers that can be treated in the process of the present invention will preferably be used tetra-pak type containers supplied by waste-management companies.

As observed above, the tetrapak-type containers known at present are made up of a material composed of a sheet of metal, to date aluminium, covered on both sides by a film of plastic, usually low-density polyethylene, which is in turn covered by an outer layer of cardboard. Said cardboard layer can be separated easily with equipment that uses water (e.g.: hydropulper), in order to generate a cardboard paste that can be used by the papermaking industry.

Once the paper layer has been removed the sheets of aluminium and plastic of the containers constitute the waste to be treated in the process of the present invention.

There follows a description of a preferred embodiment of the process in which the waste is treated in a pyrolysis reactor 1 that includes the spouted-bed contact system and in which the gas from pyrolysis is made use of as fuel energy for cogeneration equipment that produces electrical energy and thermal energy.

In an initial phase, the sheets of aluminium and plastic are washed, dried with warm air and comminuted or ground in order to achieve a granular material that is homogeneous in composition and granulometry and suitable for feeding into the reactor 1 or pyrolysis reactor. Although the particle size depends on the geometry of the reactor 1, the spouted-bed technology proposed in this embodiment permits work with particle sizes much larger than in the case of other types of reactors, representing an energy saving in this phase that has an effect on the final energy efficiency of the process.

The waters from washing the waste (sheets of aluminium and plastic) are treated in a treatment plant and the sludges produced therein are also dried with warm air and sent to an inerts landfill.

Once washed, dried and ground/comminuted, said sheets of aluminium and plastic are placed in the reactor 1 through the side opening 2, in order to carry out their low-temperature pyrolysis in the presence of a cracking catalyst.

The type of catalyst and the conditions under which the pyrolysis is carried out are ones suitable for permitting total conversion into gas, in reactor conditions, of the plastic in the aforesaid sheets, which means that the process of the present invention does not generate waxes.

In the embodiment described, the bed of catalyst particles placed inside the reactor 1 is prepared based on the use of zeolites with good properties for cracking (HZSM5, β, HY), and having a particle diameter that depends on the specific geometry of said reactor 1.

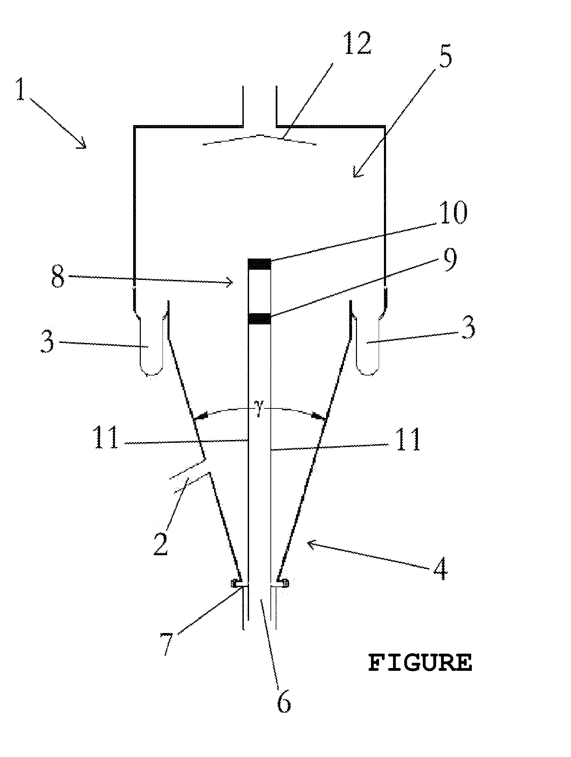

As observed in the description of the invention, spouted-bed technology is based on creating a central channel or jet of gas that forces the particles to describe cycles, thereby preventing dead zones (without circulation of material). Surprisingly, when applied to the method of the present invention, this technology has the advantage that of permitting easy segregation of the aluminium from the bed, without need to take out the catalyst. This is due to the fact that the movement of the particles varies in function of their density. Accordingly, particles of lower density, such as aluminium, describe wider trajectories in the fountain, and can therefore be differentiated and separated from the rest, for example by mounting a channel 3 on the wall of the reactor 1 or pyrolysis reactor, as can be seen in the Figure attached.

Moreover, thanks to the fact that the spouted-bed system permits continuous operation of the reactor, the channel 3 can be designed by way of overflow, in order to permit continuous outlet of the aluminium.

As the same figure shows, the pyrolysis reactor 1 with which the embodiment of the process described is carried out, presents an inverted-cone configuration 4 with a cylindrical upper prolongation 5 whose purpose is to collect the solids dragged by the gas that emerges from the center of the bed.

The trunco-conical section 4 of the reactor 1 has very particular gas inlet 6 dimensions and design that allow maximum efficiency of the gas-solid contact, minimum loss of charge and uniformity of the solids to be treated to be achieved.

Accordingly, provision has been made for the angle of inclination y corresponding to the inverted-cone part 4 of the reactor 1 to be between 28° and 50°; and for the ratio between the diameter of the gas inlet 6 and the diameter of the base 7 of the trunco-conical part 4 to be between 1/2 and 5/6. Provision has also been made for the flow of gas at the inlet 6 to be between 1.5 and 2 times greater than that pertaining to a predetermined minimum speed, depending on the specific properties of the material that makes up the bed and the geometrical factors of the reactor 1 itself.

Concerning the size of the particles that form the bed, it has been seen that the ratio between the diameter of the gas inlet 6 to the reactor 1 and the diameter of said particles must preferably lie between 2 and 30. When the ratio between the diameter of the inlet 6 and the particle diameter is greater than 30 a central device 8 must be used to guide the inlet gas to the surface of the bed and open the central jet required for the cyclic movement. This device 8 consists in two rings 9,10 of the same diameter as the inlet 6 from the pyrolysis chamber 1. One of them is flush with the upper part of the cone 4 and the other is above the cone 4. Both 9,10 are secured by means of three ribs 11 to the base 7 of the chamber or reactor 1. The purpose of the lower ring 9 is to achieve the opening of the central channel and consequent stability of the bed. The upper ring 10 prevents the height of the fountain rising too high, a situation that can arise when the particles are light or small. Furthermore, the swirling of fine particles is prevented by placing a baffle 12 in the upper part of the cylindrical section 5.

The central device 8 described in the preceding paragraph has the advantage that it permits the treatment both of materials with narrow granular distributions (little variation of particle diameters) and very heterogeneous mixtures, that is, it permits pyrolysis in a single operation of granulometric fractions of different sizes.

Surprisingly, the process proposed in the present invention enables on the one hand the complete conversion to gas of all the plastic of the waste and, on the other, the continuous separation of the aluminium in the reactor 1 through the channel/overflow 3.

In the embodiment described, at the outlet from the reactor 1 all the pyrolysis gas is recovered and cooled to obtain hydrocarbons (in gas or liquid phase) that can be used in the one or more cogeneration units for the production of electrical energy. All the plastic from the waste treated is therefore used to produce energy.

In order to optimise energy usage, the cracking catalyst used is selected to provide hydrocarbons and, preferably, hydrocarbons of a molecular size such that the molecules have fewer than 25 atoms of carbon.

Two types of equipment will preferably be used for carrying out the cogeneration, one which uses hydrocarbons in gas state and another which uses hydrocarbons in liquid state. Said equipment can carry out the cogeneration either by the alternating internal combustion engines system or by the combined-cycle system that employes gas and steam turbines and a boiler. Indeed, any system capable of generating electricity and thermal energy from a fuel can be suitable.

In the embodiment described, part of the pyrolysis gas produced is recirculated to the pyrolysis reactor 1 in order to move the bed and provide heat. The thermal energy for maintaining the temperature level of the recirculated pyrolysis gases is obtained from post-combustion of the exhaust gases from the cogeneration equipment, since, as is known, the temperature of said gases (smoke at 420°C with 12% oxygen) can be increased to 600°C by carrying out a post-combustion by providing additional oxygen.

Recirculation of pyrolysis gas at 600°C has the advantage that the pyrolysis operation can be maintained autothermally without need for any external heat source, thereby enormously increasing the efficiency of the process and enabling it to be self-sufficient from the energy point of view.

In order to take maximum advantage of the heat coming from the cogeneration equipment, provision is made for the thermal energy necessary for carrying out drying of both the aluminium and plastic waste and the sludges from the water-treatment plant to be obtained from a system that recovers the heat from the cooling circuits of the alternating motors of cogeneration equipment and from the combustion smoke of said motors, or from the combined-cycle steam turbine condensates.

Provision has likewise been made for cooling of the pyrolysis gases to yield hydrocarbons to be carried out by absorption refrigeration equipment that uses hot water from the cogeneration equipment of the process.

Both the thermal energy and the electrical energy generated with the cogeneration equipment can also be used to meet the thermal needs of parallel processes of treatment of residues or products. The energy efficiency of the process, and its economic viability, are thus increased still further.

In the embodiment described, part of the thermal energy from the cogeneration is used in order to obtain drinking water by means of a salty water desalinisation system by multi-stage thermal evaporation using hot water obtained from the exhaust gases of the alternating motors of the cogeneration equipment. Part of the thermal energy and electrical energy generated by the process will also be used to treat the cellulosic products from the containers.

Finally, the process described also provides for recovery and concentration of the carbon dioxide from the combustion smoke of the cogeneration equipment, by means of a chemical absorption and extraction system that preferably uses a 30% solution of monoethanolamine as an absorbent. The outlet gas from the system is cooled and compressed until the carbon dioxide is liquefied for subsequent storage in tanks. The gas obtained has a content of over 99.8% in carbon dioxide.

Surprisingly, the process of the present invention constitutes an integral process for the treatment of tetrapak-type containers, which recovers all the aluminium from said containers, and also yields electrical energy and other products such as drinking water and liquid carbon dioxide.

The treatment process of the present invention is very viable economically, since it permits the treatment of a large quantity of waste with the maximum energy and material efficiency, thereby constituting a real alternative to dumping of the metal and plastic waste from tetrapak-type containers.

By way of example, said process can treat up to 15,000 t/year of tetrapak-type containers, from which the following products and energy can be obtained:
Paper pulp: 10,687,500 kg/year
Aluminium: 3,562,500 kg/year
Electrical energy: 9,783,302 kWh/year
Drinking water: 636,741 m³/year
Carbon dioxide: 2,739 t/year

## Claims

1. Process for the treatment of tetrapak-type containers, especially the metal and plastic waste said containers include, which includes the stage of carrying out pyrolysis of said waste and the stage of recovering said metal from the pyrolysis, **characterised in that** said pyrolysis is carried out in the presence of a cracking catalyst and under suitable conditions to permit total conversion of the plastic that said waste includes to gas, under reactor conditions (1), and **in that** it further includes the stage of recovering said gas for energy-production and/or material use.

2. Process according to Claim 1, **characterised in that** said pyrolysis is carried out in a reactor (1) that includes the contact system named spouted bed.

3. Process according to any of the preceding claims, **characterised in that** said cracking catalyst is selected for obtaining hydrocarbons, and **in that** said energy utilisation includes the stage of generating electrical energy by means of cogeneration equipment substantially fed with hydrocarbons from said gas.

4. Process according to Claim 3, **characterised in that** said hydrocarbons have a molecular size such that the molecules have fewer than 25 atoms of carbon.

5. Process according to any of claims 3 and 4, **characterised in that** includes the stage of recovering the carbon dioxide from the combustion gases of said cogeneration equipment.

6. Process according to any of claims 3 to 5,
**characterised in that** includes the stage of recirculating part of said gas for fluidisation of the bed and for providing heat, the temperature of said recirculated gas being maintained by thermal energy from post-combustion of the exhaust gases from said cogeneration equipment.

7. Process according to any of claims 3 to 6, **characterised in that** includes the stage of cooling the gas generated in reactor conditions (1) to obtain hydrocarbons, and **in that** said cooling is carried out by means of absorption refrigeration equipment that uses thermal energy from the cogeneration equipment.

8. Process according to any of claims 3 to 7, **characterised in that** the metal and plastic of the containers is ground, washed and dried before it is pyrolysed, and **in that** the thermal energy necessary for carrying out said drying comes from said cogeneration equipment.

9. Process according to any of claims 3 to 8, **characterised in that** includes the stage of using thermal energy from said cogeneration equipment to satisfy the thermal needs of at least one parallel process of treatment of wastes or products.

10. Process according to Claim 9, **characterised in that** said parallel process includes the stage of desalinising salty water using a system of desalinisation by thermal evaporation.

11. Process according to any of claims 8 and 10, **characterised in that** said parallel process also includes the stage of treating the cellulosic products from said containers.

12. Process according to any of the preceding claims, **characterised in that** said metal is aluminium.

13. Pyrolysis reactor for carrying out the process according to any of claims 2 to 12, which includes means (3) for collecting the metal from pyrolysis of said waste, **characterised in that** it includes the contact system named spouted bed that permits said metal to be separated from the bed without need to remove the catalyst.

14. Reactor according to claim 13, **characterised in that** the wall (4,5) of said reactor includes said means (3) for collecting the metal.

15. Reactor according to any of claims 13 and 14, **characterised in that** it includes a wall with an inverted-cone configuration (4), the lower part of said wall including the gas inlet (6) for moving the bed.

16. Reactor according to claim 15, **characterised in that** said wall of trunco-conical configuration (4) includes a cylindrical upper prolongation (5).

17. Reactor according to any of claims 13 to 16, **characterised in that** said means (3) for collecting the metal include means for permitting the continuous outlet of the separated metal.

18. Reactor according to any of claims 13 to 17, **characterised in that** includes means (12) for hot filtering the gases generated in reactor conditions.

19. Reactor according to any of claims 13 to 18, **characterised in that** said metal is aluminium.
